Europäisches Patentamt

European Patent Office

Office européen des brevets

(11) Veröffentlichungsnummer: **0 221 012**
**B1**

(12) EUROPÄISCHE PATENTSCHRIFT

(45) Veröffentlichungstag der Patentschrift:
28.03.90

(51) Int. Cl.⁴: **A01N 63/04**

(21) Anmeldenummer: 86810422.5

(22) Anmeldetag: 26.09.86

(54) Schutz von Nutzpflanzenkulturen vor boden- und samenbürtigen Pflanzenkrankheiten durch Saatgutbehandlung mit Mikroorganismen-Kulturen.

(30) Priorität: 02.10.85 CH 4252/85
03.02.86 CH 398/86

(43) Veröffentlichungstag der Anmeldung:
06.05.87 Patentblatt 87/19

(45) Bekanntmachung des Hinweises auf die Patenterteilung:
28.03.90 Patentblatt 90/13

(84) Benannte Vertragsstaaten:
AT BE CH DE FR GB IT LI NL

(73) Patentinhaber: CIBA-GEIGY AG, Klybeckstrasse 141,
CH-4002 Basel(CH)

(72) Erfinder: Gindrat, Daniel, Dr., Keine
Strassenbezeichnung, CH-1261 Bassins(CH)
Erfinder: Walther, Daniel, Dr. Plant Pathology
Department, 1453 Fifield Hall University of Florida,
Gainesville Florida 32611(US)

(56) Entgegenhaltungen:
COMMONWEALTH AGRICULTURAL BUREAUX, 1976,
Nr. 76378162, Slough, GB; T. KOMMEDAHL et al.:
"Biocontrol of corn root infection in the field by seed
treatment with antagonists", & PHYTOPATHOLOGY,
Band 65, Nr. 3, 1975, Seiten 296-300
COMMONWEALTH AGRICULTURAL BUREAUX, 1978,
Nr. 78134186, Slough, GB; G.E. HARMAN et al.:
"Alteration of spermosphere ecosystems affecting
oviposition by the bean seed fly and attack by soilborne
fungi on germinating seeds", & ANNALS OF APPLIED
BIOLOGY, Band 90, Nr. 1, 1978, Seiten 1-6 000
COMMONWEALTH AGRICULTURAL BUREAUX, 1981,
Nr. 81935218, Slough, GB; M.L. HANDOO et al.: "Control
of seed-borne fungi of maize by coating seeds with
antagonistic ones", & SEED RESEARCH, Band 7,

(56) Entgegenhaltungen: (Fortsetzung)
Nr. 2, 1979, Seiten 151-156
COMMONWEALTH AGRICULTURAL BUREAUX, 1981,
Nr. 81972698, Slough, GB; G.E. HARMAN et al.:
"Trichoderma hamatum effects on seed and seedling
disease induced in radish and pea by Pythium spp. or
Rhizoctonia solani", & PHYTOPATHOLOGY, Band 70,
Nr. 12, 1980, Seiten 1167-1172978, Seiten 1-6 000
COMMONWEALTH AGRICULTURAL BUREAUX, 1985,
Nr. 85158955, Slough, GB; J.P. HUBBARD et al.:
"Interaction of a biological control agent, Chaetomium
globosum, with seed coat microflora", & CANADIAN
JOURNAL OF MICROBIOLOGY, Band 28, Nr. 4, 1982,
Seiten 431-437eiten 1167-1172978, Seiten 1-6 000

## Beschreibung

Die vorliegenden Erfindung betrifft ein Verfahren zum Schützen von Zuckerrüben und Baumwolle vor Pflanzenkrankheiten, welche durch bodenbürtige und auch durch samenbürtige Mikroorganismen hervorgerufen werden. Das Verfahren besteht darin, dass man das Saatgut mit einer Schutzumhüllung umgibt in die man eine wirksame Menge Kulturextrakte von Chaetomium globosum einarbeitet. Die Erfindung betrifft ebenfalls das mit Chaetomium globosum-Ascosporen umhüllte Saatgut sowie ein Verfahren zu dessen Herstellung.

Die keimende Jungpflanze wird oft von pathogenen bodenbürtigen Mikroorganismen befallen, welche die Pflanzen zum Faulen und Absterben bringen, was der Landwirtschaft grossen Schaden zufügt. Man begegnet solchen Krankheiten üblicherweise mittels chemisch hergestellten Fungiziden.

Es wurden auch schon Versuche unternommen, Mikroorganismen selbst zum Schutz gegen Pflanzenkrankheiten einzusetzen. So interessant solche Versuche auch waren, so haben sich entsprechende Methoden in der Praxis nicht durchsetzen können, weil industriell hergestellte Fungizide wirksamer, und in der Handhabung einfacher waren.

Es ist nun überraschenderweise gelungen mittels eines Ueberzuges welcher Ascosporen von Chaetomium globosum enthalten, die Schutzwirkung von mit handelsüblichen Fungiziden überzogenen Samen von Zuckerrüben und Baumwolle in vitro und im Feldversuch zu egalisieren und sogar zu übertreffen. Die verwendeten Sporen sind relativ einfach zu züchten und sind gegen Austrocknung nicht empfindlicher als die damit überzogenen Samen. Man kann die Sporen auf einfache Weise einem Samenüberzug beimischen. Ihre Handhabung ist nicht schwieriger als die eines chemisch hergestellten Fungizides. Die Sporen können ohne grossen Aufwand mit einfacher Ausrüstung gezüchtet und geerntet werden.

Zuckerrübenkulturen (Beta vulgaris) werden im Boden durch eine Reihe von Mikroorganismen befallen, wovon die wichtigsten pathogene Pilze wie Pythium ultimum, Rhizoctonia solani, Aphanomyces cochlioides, Phoma betae, Fusarium sp. und Botrytis sp. sind.

Diese infizieren das Gewebe der Wurzeln und des Stengels, was das Umlegen und schliesslich das Faulen der Jungpflanze zur Folge hat.

Die Zuckerrübensamen sind flache fünfeckige Sterne, welche die Tendenz haben sich ineinander zu verhaken. Um sie mühelos maschinell saen zu können werden sie bereits vom Samenhändler mit einem Ueberzug versehen, pelletiert. Die Samenumhüllung wird dabei routinemässig mit einem chemisch hergestellten Fungizid resp. Fungizidgemisch versehen.

Baumwollkulturen (Gossypium hirsutum) werden ebenfalls durch die Pilze Pythium ultimum und Rhizoctonia solani infiziert, zu welchen sich Thielaviopsis basicola und Fusarium spp. gesellen. Es handelt sich meistens um Grosskulturen, die intensiv mit Agrochemikalien behandelt werden, da Krankheiten und Ernteausfälle finanzielle Verluste verursachen die nicht durch Erträge in anderen Kulturen ausgeglichen werden können. Die Behandlung der Kultur und/oder der Saat mit Fungiziden ist im Baumwollanbau Routine.

Chaetomium globosum gehört zu den Pilzen der Gattung Ascomyceten. Es handelt sich um die am weitesten verbreitete Species Chaetomium. Man findet den Pilz im Boden vor allem in der Wurzelzone verschiedener Pflanzen. Es handelt sich um einen Cellulose-Saprophyten, der auf Pflanzenrückständen zu finden ist. Das Vermögen Cellulose und andere Polysaccharide abzubauen ist studiert aber nicht technisch benutzt worden.

Die Möglichkeit der Verwendung von Chaetomium globosum zur Bekämpfung von Pflanzenkrankheiten ist in anderem Zusammenhang beschrieben worden. So haben z.B. Tveit und Wood in Ann. appl. Biol. 43 538-552 (1955) die Möglichkeit der Bekämpfung vom Fusarium nivale-Rostbrand an Haferkulturen beschrieben; ferner beschreiben Chang und Kommedahl in Phytopathology 58 1395-1401 (1968) sowie Kommedahl und Mew in Phytopathology 65 296-300 (1975) die Möglichkeit zur Bekämpfung des durch Fusarium roseum verursachten Maisbrandes.

Heye und Andrews beschreiben schliesslich in Phytopathology 73 650-654 (1983) die Möglichkeit zur Bekämpfung von Venturiainaequalis, welcher Schorf bei Aepfeln verursacht.

Die erfolgreiche Verwendung von Chaetomium globosum zum Schutz des Saatgutes von Zuckerrüben und Baumwolle ist neu.

Chaetomium globosum lässt sich leicht züchten, schon bei Raumtemperatur in einem Malz oder cellulosehaltigen Kulturmilieu welches Spurenelemente enthält bei neutralem bis sauren pH.

Das Mycelium bildet sich schnell als verfilztes Gewebe, welches auf einem festen Kulturmilieu anhaftet oder falls man es auf einem dem Kulturmilieu aufliegenden Filterpapier gezüchtet hat, diesem auch anhaftet. Die Perithezien, welche Ascosporen enthalten, bilden sich dann auf den Pilzfäden und geben dem Substrat eine schwarze Farbe. In geschüttelten Flüssigkulturen bildet sich ein Mycel, das keine Perithezien trägt. Auf den Filterpapierkulturen werden die Perithezien durch Abkratzen gewonnen, dann getrocknet und durch Mahlen in ein Pulver verarbeitet, das vorwiegend aus freien Ascosporen und aus Mycel- und Perithezienbruchstücken besteht. Bei Flüssigkulturen wird das Mycel durch Filtrieren des Milieus gewonnen und dann in einer schnell rotierenden Propellermühle zerkleinert.

Das so gewonnene, aus Ascosporen und Hyphenstücken bestehende Pulver ist beständig und lagerfähig bei Temperaturen zwischen 10° und 30°C und bei einer relativen Luftfeuchtigkeit zwischen 20 und 60 %. Auch längere Zeit gelagerte Sporen keimen innerhalb Stunden, wenn sie mit feuchter Erde und/oder Nährmilieu in Kontakt kommen.

Das Saatgut der Pflanzen wird in bekannter Weise mit einem trocknungsfähigen flüssigen Ueberzugsmaterial benetzt, dann während des Trocknungsprozesses, wenn es noch klebrig ist, mit dem Ascosporenpulver in Berührung gebracht, z.B. durch Schütteln oder Abrollen der Samen über das auf eine Fläche geschichtete Pulver, und schliesslich fertig getrocknet, bis der Ueberzug gehärtet ist.

Als Ueberzugsmittel kommen für die Samenbeizung geeignete Lösungen in Frage. Diese können Wasser oder organische Lösungsmittel enthalten, das die Schutzschicht bildende Material kann organischer oder anorganischer Natur sein. Als Beispiele seien z.B. folgende Lösungen genannt:

18 Teile Polyurethan Präpolymer mit freien Isocyanat-Endgruppen (No.W.23 091 Pittsburg Plate Glass Co)
9 Teile Polyketimin (No.W.23 092 Pittsburg Plate Glass Co)
73 Teile Aceton
50 Teile hochmolekulares Polyvinylacetat-Homopolymer (S-6930 H.B.Fuller Co)
20 Teile Wasser
1-2 Teil Methylcellulose
200 Teile Wasser
1-2 Teil Xanthan
100 Teile Wasser
15-30 Teile Gummi arabicum
100 Teile Wasser

Man verwendet auch Ueberzugsmittel welche Tonpartikel, Alginate und weitere Formulierungsstoffe enthalten.

Die Samen werden mit den Lösungen benetzt oder besprüht und dann im Luftstrom auf einem Sieb oder in einem Luftwirbelmischer getrocknet und im noch klebrigen Zustand mit dem Ascosporenpulver bestäubt. Um gut wirksam zu sein sollte pro Pflanzensamen $10^4$ bis $6 \times 10^5$ Sporen kommen. Die Sporendichte wird durch Lösen einer Anzahl Samen in Wasser und messen der Suspension mit einem Colorimeter oder Haematometer ermittelt.

Das mit Sporen überzogene Saatgut kann ebensogut gelagert werden wie unbehandelte Samen. Sie sind während des Keimens gegen Infektionen durch bodenbürtige Krankheitserreger geschützt.

Das Züchten von <u>Chaetomium globosum</u> und das Ernten der Ascosporen ist denkbar einfach und kann ohne technische Hilfsmittel auch im Kleinbetrieb durchgeführt werden. Das kann vor allem da interessant sein wo aus irgendwelchen Gründen auf die Verwendung von chemisch hergestellten Fungiziden verzichtet wird.

<u>Chaetomium globosum</u> wächst praktisch überall dort, wo ihm Cellulose oder Polysaccharide und Feuchtigkeit zur Verfügung stehen. Das Züchten gelang in verschiedenen Kulturen und bei Temperaturen von 10 bis 30°C. Beispiele von flüssigen und festen Kulturmilieus sind: 2 Teile Malzextrakt (Oxoid) (auf pH 5.3 eingestellt)
100 Teile Wasser
(Kultur 4 Tage bei 24° und mit sich langsam drehendem Rührer).
...
1 Teil Glukose
0.3 Teile Hefeextrakt (Difco)
2 Teile Agar (Sigfried)
100 Teile Wasser
...
1 Teil Cellulose (Merck, mikrokristallin)
2 Teile Agar
0,3 Teile Hefextrakt (Difco)
100 Teile Wasser
...
1 g $KH_2PO_4$ (Czapek-Dox)
0,5 g $MgSO_4$
0,5 g KCl
2 g $NaNO_3$
0,1 g $FeSO_4$
20 g Glukose
Wasser ad 1 l
...
2 Teile Malzextrakt (Oxoid)
2 Teile Agar (Sigried)
100 Teile Wasser
...
1 g $KH_2PO_4$
0,5 g $MgSO_4$

3

2 g KNO$_3$
2 g CaCO$_3$
20 g Glukose
0,1 g Hefeextrakt
12 g Malzextrakt (Corn steep liquor)
Wasser ad 1 l
...

Das mit Perithezien reich besetzte Mycelium wird nach 4-6 Wochen von der Kultur dekantiert resp. filtriert und getrocknet.

Die Kultur von Ascosporen gelingt auch wenn man Filterpapier mit einer Suspension welche 10$^4$-10$^5$ Sporen pro ml in einem Kulturbouillon tränkt und dieses dann bei Temperaturen zwischen 10° und 25° in einer Petrischale bei relativer hoher Luftfeuchtigkeit züchtet. Nach ca. 4 Wochen werden die Papiere dann getrocknet und das mit Sporen bedeckte Pilzgewebe kann mit dem Spachtel ab dem Filterpapier geschabt werden.

Die nachfolgenden Beispiele erläutern die erfindungsgemässe Verfahren ohne den Erfindungsgegenstand einzuschränken.

Beispiel 1:

Züchtung von Ascosporen von <u>Chaetomium globosum</u>

Petrischalen werden mit einer Nährlösung Malz 2 % - Agar 2 % zur Hälfte gefüllt, in welche man als Celluloselieferant je ein Filterpapier gegeben hat. Die Nährlösung wird dann mit einigen Tropfen einer Suspension von mit <u>Chaetomium globosum</u> infizierter Erde beimpft. Die Petrischalen werden in Klimakammern bei 22°C gehalten. Es bildet sich ein Mycelium das auf der Kultur anhaftet und nach ca. 10 Tagen auch Perithezien, welche als schwarze Punkte auf dem Mycelium sichtbar sind. Nach 4 Wochen werden einige Perithezien von der Kultur entfernt und zu einer Suspension aufgearbeitet, die 10$^4$ - 10$^5$ Ascosporen pro ml enthält. Man tränkt nun Filterpapiere mit dieser Suspension, gibt diese auf Malzextraktnährböden in Petrischalen, lässt sie 4 - 6 Wochen bei 22°C in der Klimakammer. Die Filterpapiere werden in dieser Zeit mit Mycelium und Perithezien überwachsen. Man trocknet sie dann, kratzt das Pilzgewebe und die Sporen mit einem Spachtel vom Filterpapier und mahlt oder verkleinert die geerntete Pilzmasse bei 500 Umdrehungen/Minute in einem Mischgerät. Man erhält so ein dunkles aus Sporen und Bruchstücken von Pilzfäden bestehendes Pulver, welches sich für den Samenüberzug eignet.

Ein rundes Filterpapier von 8.7 cm Durchmesser liefert durchschnittlich 120 mg Pulver, welches aus 10$^8$-10$^9$ Ascosporen und Bruchstücken von Hyphen besteht.

Beispiel 2:

Umhüllen von Zuckerrübensamen mit einer Schicht von Ascosporen von <u>Chaetomium globosum</u>

Adhäsive Lösungen bestehend aus

| Methylcellulose | 0.5 Teile | 1 Teil |
|---|---|---|
| Gummi arabicum | 15 Teile | 30 Teile |

Wasser bis 100 Volumenteile erreicht sind, werden zubereitet.

Diese Lösungen werden während 20 Minuten im Autoklaven bei 120°C sterilisiert und dann durch eine Düse in den Luftstrom eines mit Zuckerrübensamen beschichteten Luftwirbelmischers geblasen. Auf 3,2 g Zuckerrübensamen (ca. 260 Samen) kommen 0.7 ml Lösung. Die mit einer klebrigen Haut umhüllten Samen werden dann zusammen mit dem Ascosporenpulver geschüttelt, gesiebt und auf dem Sieb getrocknet. An einem Samenkorn haften so zwischen 150 000 - 600 000 Sporen. Dieses wurde gemessen, indem man 10 Samen in 10 ml Wasser suspendierte und aus der Suspension mittels eines Haematometers die Anzahl der sich darin befindenden Sporen ermittelte.

Beispiel 3:

Umhüllen von Baumwollsamen mit einer Schicht von Ascosporen von <u>Chaetomium globosum</u>

10 g Baumwollsamen (ca. 110 Samen) werden im Luftwirbelmischer mit 0.5 ml einer 0,6 %igen Methylcellosolvelösung besprüht und die noch klebrigen Samen dann in einer Petrischale über ein Ascosporen-Pulver gerollt und anschliessend über einem Sieb getrocknet.

Beispiel 4:

Umhüllen von Zuckerrübensamen mit dem Mycelium von <u>Chaetomiumglobosum</u>

In einem 250 ml Erlenmeyer-Kolben gibt man 150 ml eines 2%igen Malzextraktes (Oxoid) und impft diese Nahrlösung mit 1 ml einer $10^5$ Ascosporen pro ml enthaltenden Sporen-Suspension. Man züchtet die Kultur während 4 Tagen bei 24°.

Dann entnimmt man 10 ml des oeligen Kulturbouillons und gibt 1,6 g Zuckerrübensamen dazu. Dieses rührt man 10 Minuten bei Raumtemperatur, und giesst dann die Samen auf ein Sieb zum Abtropfen. Die so behandelten Samen werden noch feucht ausgesät.

Beispiel 5:

Umhüllen von Zuckerrübensamen mit Eisenphosphat und Ascosporen von <u>Chaetomium globosum</u>

In einer filtrierten Lösung von aus 1,36 g Eisenphosphat in 20 ml 0,36 molaren Oxalsäurelösung vom pH 5.4 rührt man während 20 Minuten bei Raumtemperatur 3,2 g Zuckerrübensamen. Die Samen werden auf ein Sieb gegossen und im Luftstrom getrocknet. Nach abgeschlossener Trocknung werden sie gemäss Beispiel 2 mit Ascosporen umhüllt.

Beispiel 6:

Umhüllen von Samen mit einem chemisch hergestellten Fungizid. 6,4 Zuckerrübensamen oder 10 g Baumwollsamen werden während 20 Minuten bei Raumtemperatur in 20 ml einer 0,1 %igen Lösung des Wirkstoffes 3a,4,7,7a-Tetrahydro-N-(trichormethansulfenyl)phthalimid (Captan, hergestellt durch Lösen von 0,2 % Orthozid 50 Sigfried) gerührt. Die Samen werden dann auf einem Sieb gesammelt und im Luftstrom getrocknet.

Beispiel 7:

Keimversuche mit Ascosporen von <u>Chaetomium globosum</u>

Die Keimfähigkeit von gelagerten, resp. in Samenumhüllungen eingeschlossenen Sporen wurde mit denjenigen von frisch geernteten Sporen verglichen.

Sporen, welche frisch von Kulturen geerntet werden und Proben von solchen, welche während 1 bis 15 Monaten bei 10-30°C und 20-60 % relativer Feuchtigkeit gelagert waren, sind auf Agarplatten gegeben und in Klimakammern bei 22° auf ihre Keimfähigkeit geprüft worden.

Fast alle untersuchten Sporen keimten innerhalb von 7 Stunden, rechtzeitig um den keimenden Samen schützen zu können.

| Temperatur bei der Lagerung | Keimfähigkeit nach der Lagerung von | | | | |
|---|---|---|---|---|---|
| | keine (frische Sporen) | 1 Monat | 5 Monate | 10 Monate | 15 Monate |
| 10° | – | 84 % | 85 % | 90 % | 90 % |
| 15° | – | 78 % | 80 % | 59 % | 13 % |
| 20° | 50 % | 81 % | 91 % | 86 % | 92 % |
| 25° | – | 78 % | 90 % | 89 % | 91 % |
| 30° | – | 76 % | 85 % | 82 % | 85 % |

Beispiel 8:

Prüfung der Keimfähigkeit der umhüllten Samen.

Unbehandelte sowie industriell behandelte Samen von Zuckerrübe und Baumwolle werden zu je 10 Samen in eine Petrischale auf eine dicke Lage feuchtes Filterpapier gelegt. Die Petrischalen werden dann in Klimakammern gegeben und beobachtet. Das Kriterium für die Keimung ist das Erscheinen der Würzelchen.

Die <u>Zuckerrübensamen</u> werden 12 Stunden im Tageslicht bei 20°C und 12 Stunden in der Dunkelheit bei 14°C Nachttemperatur und 80/90 % Luftfeuchtigkeit gehalten. Die unbehandelten Samen keimen zwischen dem 3. und dem 8. Tag zu 75 % und bis zu 90 % am 20. Tag. Die behandelten Samen beginnen später nach dem 6. Tag zu keimen und erreichen bis zum 20. Tag ebenfalls bis zu 85 % Keimfähigkeit.

Die Baumwollsamen werden 14 Stunden im Tageslicht bei 25°C und 10 Stunden in der Dunkelheit bei 20°C Nachttemperatur gehalten. Die unbehandelten Samen keimen zwischen dem 2. und dem 8. Tag zu fast 100 %. Die behandelten Samen haben eine Keimfähigkeit von über 90 %.

Beispiel 9:

Prüfung der Schutzwirkung von mit Ascosporen von Chaetomium globosum umhüllten Zuckerrübensamen in der Klimakammer.

Unbehandelte und gemäss Beispiel 2 mit Ascosporen umhüllte Zuckerrübensamen werden in mit Erde gefüllte Plastikschalen der Dimension 10 x 12 x 4,5 cm gesteckt. Pro Schalen werden 20 Samen gegeben, die einzeln je in eine 9 mm tief gedrückte Vertiefung gegeben werden. Bei der Erde handelt es sich um desinfizierte (100°C) und mit Phytium ultimum oder mit Rhizoctonia solani inokulierte Erde. Die Saatschalen werden dann in Klimakammern 12 Stunden im Tageslicht bei 20°C und 12 Stunden in der Dunkelheit bei 14°C Nachttemperatur und 80-90 % Luftfeuchtigkeit gehalten. Die mit infizierter Erde gefüllten Saatschalen werden vor der Saat bereits 3 Tage in der Klima kammer vorbereitet. Pro Versuch werden 5 Schalen mit je 100 Samen eingesetzt. Die Saatschalen werden täglich beobachtet und die abgestorbenen Pflänzchen entfernt und für mykologische Untersuchungen der Krankheitserreger verwendet.

Der Versuch wird 3 Wochen nach dem Ausäen abgeschlossen und die Anzahl und der Zustand der erhaltenen Pflänzchen bestimmt.

Die Resultate sind wie folgt:

|  | **Ueberlebende Pflanzen** | | |
|---|---|---|---|
| **Samen** | **Erde desinfiziert** | **inokuliert mit** | |
| | | **Pythium ultimum** | **Rhizoctonia solani** |
| unbehandelt | 79 % | 18 % | 7 % |
| gemäss Beispiel 2 mit Chaetomium globosum 1,5•10⁵ Sporen | - | 63 % | 68 % |
| gemäss Beispiel 6 mit 0,1 % Captan behandelt | - | 88 % | 53 % |

Beispiel 10:

Prüfung der Schutzwirkung von mit Ascosporen von Chaetomium globosum umhüllten Baumwollsamen in der Klimakammer.

Plastikschalen 10 x 12 x 4,5 cm werden mit Pythium ultimum und Rhizoctonia solani inokulierter Erde gefüllt und während 3 Tage in einer Klimakammer bei 80-90 % Luftfeuchtigkeit 16 Stunden Tag bei 26°C und 8 Stunden Nacht bei 20°C gehalten. Danach gibt man in jede Schale je 9 Baumwollsamen in eine 15 mm tiefe Saatgrube. Pro Versuch werden 10 Schalen oder 90 Samen eingesetzt. Die Schalen werden regelmässig beobachtet und die abgestorbenen Pflänzchen jeweils entfernt und für die mykologische Untersuchung der Krankheitserreger verwendet. Der Versuch wird nach 3 Wochen abgeschlossen und die Anzahl und der Zustand der gekeimten Pflänzchen in % bestimmt.

Ueberlebende Pflanzen

| Samen | Erde desinifiziert | infiziert mit | |
|---|---|---|---|
| | | Pythium ultimum | Rhizoctonia solani |
| unbehandelt | 76 % | 16 % | 20 % |
| gemäss Beispiel 3 mit Chaetomium globosum 1,5•10⁵ Sporen | - | 76 % | 58 % |
| gemäss Beispiel 6 mit 0,1 % Captan behandelt | - | 84 % | 40 % |

Beispiel 11

Schutzwirkung von mit diversen Schutzumhüllungen versehenen Zuckerrübensamen.

Zuckerrübensamen wurden gemäss dem Verfahren vom Beispiel 2 mit verschiedenen Adhäsiv-Lösungen und mit Ascosporen Pulver umhüllt. Die Sporendichte betrug bloss $1,5 \cdot 10^5$ Sporen pro Samen. Die Samen werden zusammen mit unbehandelten Samen und mit "Captan" behandelten Samen verglichen. (siehe Beispiel 6)

Saatschalen werden mit einer durch Pythium ultimum natürlich infizierten Erde gefüllt.

Dann wird jede Saatschale in 9 mm tief mit je 20 Zuckerrübensamen besät. Die Saatschalen werden in der Klimakammer unter denselben Bedingungen und regelmässigem Bewässern gelassen. Das Keimen der Samen wird beobachtet, abgestorbene Pflanzen werden entfernt. Die Wirkung der Schutzumhüllung wird 28 Tage nach der Saat durch Zählen der überlebenden Pflanzen bewertet.

Ueberlebende Pflanzen

| Saatumhüllung | in desinfizierter Erde | mit Pythium ultimum infizierter Erde |
|---|---|---|
| keine | 91 % | 51 % |
| 0,5 % Methylcellulose + 1,5·$10^5$ Sporen | | 72 % |
| 1 % Methylcellulose + 1,5·$10^5$ Sporen | | 75 % |
| Xanthan 0.3 % + 1,5·$10^5$ Sporen | | 65 % |
| Xanthan 1 % + 1,5·$10^5$ Sporen | | 73 % |
| Gummi arabicum 13 % + 1,5·$10^5$ Sporen | | 66 % |
| Gummi arabicum 30 % + 1,5·$10^5$ Sporen | | 77 % |
| Keine | 9 % | |
| Myceliumkultur (Beispiel 4) | | 57 % |
| Captan 0,1 % Wirkstoff | | 86 % |

Derselbe Versuch wurde in mit Pythium ultimum inokulierter Erde durchgeführt. Die Samen waren unbehandelt, gemäss Beispiel 2 mit 1.5·$10^5$ Ascospores von Chaetomium globosum, gemäss Beispiel 5 mit Eisenphosphat und Ascosporen oder gemäss Beispiel 6 mit Captan überzogen.

Ueberlebende Pflanzen

| Saatumhüllung | desinfizierte Erde | mit Pythium ultimum inokulierte Erde |
|---|---|---|
| keine | 86 % | 9 % |
| 0,5 % Methylcellulose + 1,5·$10^5$ Ascosporen | - | 48 % |
| Eisenphosphat + 0,5 % Meth.cell. + 1,5.$10^5$ Ascosporen | - | 67 % |
| Captan 0,1 % | - | 88 % |

Beispiel 12:

Feldversuch

Zuckerrübensamen wurden mittels einer Saatmaschine im April in einem Feld in CH 1399 Corcelles in Reihen ausgesät. Die Pflanzen werden nach 36 Tagen gezählt und begutachtet. Jede Saatumhüllung wird in 6 Versuchsparzellen auf je einer Reihe à 12 m, geprüft.

Die Parcellen wurden biologisch untersucht und es konnten folgende pathogenen Mikroorganismen festgestellt werden:

Aphanomyces cochlioides, Rhizoctonia spp, Fusarium spp, Pythiumdebaryanum.

Dabei werden unbehandelte gemäss Beispiel 2 mit chaetomium globosum Sporen umhüllte oder industriell mit Thiram* (TMTD) überzogene Samen benutzt. Das Ueberleben der Pflanzen wurde nach 35 Tagen geprüft.

| Saatumhüllung | Ueberlebende Pflanzen | |
| --- | --- | --- |
| | Chavorney | Corcelles |
| keine | 42 % | 55 % |
| gemäss Beispiel 2 mit 1,5·10⁵ Ascosporen | 64 % | 61 % |
| Industriell ohne Fungizid | 32 % | 37 % |
| Industriell TMTD* | 41 % | 43 % |

Thiram oder TMTD, Tetramethylthioperoxy dicarbonsäurediamid $(CH_3)_2N\text{-}CS\text{-}S\text{-}S\text{-}CS\text{-}N(CH_3)_2$ IG BAYER. Die behandelten Samen wurden von der Kleinwanzlebener Saatzucht in D-3352 Einbeck bezogen.

**Patentansprüche**

1. Verfahren zum Schutz von Zuckerrüben- und Baumwollsaaten von durch boden- und samenbürtige Mikroorganismen hervorgerufene Krankheiten, dadurch gekennzeichnet, daß man das Saatgut dieser Pflanzen mit einer Schutzumhüllung umgibt, in die man eine wirksame Menge eines Kulturextraktes des Pilzes Chaetomium globosum einarbeitet.

2. Verfahren gemäß Anspruch 1, dadurch gekennzeichnet, daß die Schutzschicht der Samen eine wirksame Menge von 10⁴–6·10⁵ Ascosporen enthält.

3. Saatgut von Zuckerrüben und Baumwolle, welches mit einer Schutzschicht überzogen ist, das eine wirksame Menge von Ascosporen von Chaetomium globosum enthält.

4. Saatgut gemäß Anspruch 3, dessen Schutzschicht 10⁴–6·10⁵ Ascosporen enthält.

5. Verfahren zum Überziehen von Saatgut von Zuckerrüben und Baumwolle mit einer Schicht, welche Ascosporen von Chaetomium globosum enthält, dadurch gekennzeichnet, daß man

a) die Samen oder anderes Saatgut mit einer trocknungsfähigen, flüssigen organischen oder anorganischen Lösung benetzt,

b) die Trocknung einleitet,

c) vor der vollständigen Trocknung, wenn der Ueberzug noch klebrig ist, die Samen mit einem aus Ascosporen von Chaetomium globosum bestehenden Pulver mischt, und

d) die Trocknung vervollständigt.

6. Verfahren gemäß Anspruch 5, dadurch gekennzeichnet, daß die trocknungsfähige Lösung Wasser, Methylcellulose und Gummi arabicum enthält.

7. Verfahren gemäß Anspruch 5, dadurch gekennzeichnet, daß die trocknungsfähige Lösung Wasser und Eisenphosphat enthält.

8. Verfahren gemäß Anspruch 5, dadurch gekennzeichnet, daß die trocknungsfähige Lösung Wasser, Tonpartikel, Alginate und weitere Formulierungsstoffe enthält.

**Claims**

1. A method of protecting sugar beet and cotton seeds against diseases caused by soil-borne and seed-borne microorganisms, which comprises providing the seeds of these plants with a protective coating into which an effective amount of a culture extract of the fungus <u>Chaetomium globosum</u> is incorporated.

2. A method according to claim 1, wherein the protective coating of the seeds contains an effective amount of $10^4$–$6 \cdot 10^5$ ascospores.

3. Seeds of sugar beet and cotton which are provided with a protective coating which contains an effective amount of ascospores of <u>Chaetomium globosum</u>.

4. Seeds according to claim 3, the protective coating of which contains $10^4$–$6 \cdot 10^5$ ascospores.

5. A method of providing seeds of sugar beet and cotton with a coating which contains ascospores of <u>Chaetomium globosum</u>, which method comprises

a) wetting the seeds or other type of seed with a liquid organic or inorganic solution which can be dried,
b) initiating the drying,
c) before they are completely dry, when the coating is still tacky, mixing the seeds with a powder consisting of ascospores of <u>Chaetomium globosum</u>, and
d) completing the drying.

6. A method according to claim 5, wherein the solution which can be dried contains water, methyl cellulose and gum arabic.

7. A method according to claim 5, wherein the solution which can be dried contains water and iron phosphate.

8. A method according to claim 5, wherein the solution which can be dried contains water, clay particles, alginates and other formulation substances.

**Revendications**

1. Procédé pour la protection des semences de betteraves sucrières et de coton contre les maladies provoquées par les microorganismes provenant du sol ou des semences, caractérisé en ce que l'on entoure les semences de ces plantes d'un enrobage de protection dans lequel on insère une quantité efficace d'un extrait de culture du champignon <u>Chaetomium globosum</u>.

2. Procédé selon la revendication 1, caractérisé en ce que la couche protectrice des semences contient une quantité efficace de $10^4$–$6.10^5$ ascospores.

3. Semences de betteraves sucrières et de coton revêtues d'une couche protectrice, contenant une quantité efficace d'ascospores de <u>Chaetomium globosum</u>.

4. Semences selon la revendication 3, dont la couche protectrice contient $10^4$–$6.10^5$ ascospores.

5. Procédé pour revêtir des semences de betteraves sucrières et de coton d'une couche contenant des ascospores de <u>Chaetomium globosum</u>, caractérisé en ce que

a) l'on imprègne les graines ou d'autres semences avec une solution liquide organique ou minérale apte au séchage,
b) l'on amorce le séchage,
c) l'on mélange, avant que le séchage soit terminé, lorsque le revêtement est encore collant, les semences avec une poudre constituée d'ascospores de <u>Chaetomium globosum</u> et
d) l'on achève le séchage.

6. Procédé selon la revendication 5, caractérisé en ce que la solution apte au séchage, contient de l'eau, de la méthylcellulose et de la gomme arabique.

7. Procédé selon la revendication 5, caractérisé en ce que la solution apte au séchage contient de l'eau et du phosphate de fer.

8. Procédé selon la revendication 5, caractérisé en ce que la solution apte au séchage contient de l'eau, des particules d'argile, des alginates et d'autres produits de formulation.